# EUROPEAN PATENT APPLICATION

(11) **EP 3 876 625 A1**
(43) Date of publication of application: **08.09.2021**
(21) Application number: 18938895.2
(22) Date of filing: 01.11.2018
(51) Int. Cl.: H04W 72/04, H04W 72/14

(54) **USER TERMINAL**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/040768
(87) International publication number: WO 2020/090093

(57) **Abstract**

A user terminal includes: a receiving section that receives pieces of configuration information of one or more configured grants; and a control section that controls differentiation of at least one of the pieces of configuration information of the one or more configured grants and a set including the pieces of configuration information of the one or more configured grants.

## Description

### Technical Field

The present disclosure relates to a user terminal of a next-generation mobile communication system.

### Background Art

In Universal Mobile Telecommunications System (UMTS) networks, for the purpose of higher data rates, lower latency and so on, Long Term Evolution (LTE) has been specified (Non-Patent Literature 1). Furthermore, for the purpose of a larger capacity, higher sophistication and so on than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR), 3GPP Release (Rel.) 15 and subsequent releases and so on) are also studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)" April 2010

### Summary of Invention

### Technical Problem

Scheduling that uses a dynamic grant and scheduling that uses a configured grant are studied for 3GPP Rel. 15.

Furthermore, it is also studied for 3GPP Rel. 16 to enhance scheduling that uses a configured grant. For example, it is also studied to make it possible to configure to a UE one or more configured grants in one cell or one Bandwidth Part (BWP).

However, when one or more configured grants are configured to the UE, there is a risk that the UE cannot appropriately control periodic transmission of an uplink shared channel (e.g., PUSCH: Physical Uplink Shared Channel) that is based on the one or more configured grants. The same problem may occur when Semi-Persistent Scheduling (SPS) of a downlink shared channel (PDSCH: Physical Downlink Shared Channel) on Downlink (DL) is applied, too.

It is therefore one of objects of the present disclosure is to provide a user terminal that can appropriately control periodic transmission of an uplink shared channel and reception of a downlink shared channel.

### Solution to Problem

A user terminal according to one aspect of the present disclosure includes: a receiving section that receives pieces of configuration information of one or more configured grants; and a control section that controls differentiation of at least one of the pieces of configuration information of the one or more configured grants and a set including the pieces of configuration information of the one or more configured grants.

### Advantageous Effects of Invention

According to one aspect of the present disclosure, it is possible to appropriately control periodic transmission of an uplink shared channel and reception of a downlink shared channel.

### Brief Description of Drawings

Fig. 1 is a diagram illustrating one example of use case 1 of a plurality of configured grant configurations.
Fig. 2 is a diagram illustrating one example of use case 2 of a plurality of configured grant configurations.
Figs. 3A and 3B are diagrams illustrating one example of first differentiation of configured grant configurations according to a first aspect.
Figs. 4A and 4B are diagrams illustrating one example of second differentiation of configured grant configurations according to the first aspect.
Fig. 5 is a diagram illustrating one example of values of one or more fields in DCI according to a second aspect.
Fig. 6 is a diagram illustrating one example of a schematic configuration of a radio communication system according to one embodiment.
Fig. 7 is a diagram illustrating one example of a configuration of a base station according to the one embodiment.
Fig. 8 is a diagram illustrating one example of a configuration of a user terminal according to the one embodiment.
Fig. 9 is a diagram illustrating one example of hardware configurations of the base station and the user terminal according to the one embodiment.

### Description of Embodiments

### <Dynamic Grant-Based Transmission and Configured Grant-Based Transmission (Type 1 and Type 2)>

Dynamic grant-based transmission and configured grant-based transmission are studied for NR.

The dynamic grant-based transmission is UL transmission that uses an uplink shared channel (e.g., Physical Uplink Shared Channel (PUSCH)) based on Downlink Control Information (DCI) (UL grant), or DL transmission that uses a downlink shared channel (e.g., Physical Downlink Shared Channel (PDSCH)) based on DCI (DL assignment).

The configured grant-based transmission is UL transmission that uses an uplink shared channel (e.g., PUSCH) based on configuration information (that may be referred to as, for example, a configured grant, a configured UL grant and so on) configured by a higher layer, or DL transmission that uses a downlink shared channel (e.g., PDSCH) based on configuration information (e.g., sps-config) configured by the higher layer.

According to the configured grant-based transmission, UL resources are already allocated to a UE, and the UE can autonomously perform UL transmission by using configured resources, so that it is possible to expect realization of low-latency communication.

The dynamic grant-based transmission may be referred to as a dynamic grant-based PUSCH, UL transmission with a dynamic grant, a PUSCH with a dynamic grant, UL transmission with a UL grant, UL grant-based transmission, UL transmission that is scheduled by a dynamic grant (i.e., to which a transmission resource is configured) and so on.

The configured grant-based transmission may be referred to as a configured grant-based PUSCH, UL transmission with a configured grant, a PUSCH with a configured grant, UL transmission without a UL grant, UL grant-free transmission, UL transmission that is scheduled by a configured grant (i.e., to which a transmission resource is configured) and so on.

Furthermore, configured grant-based DL transmission may be referred to as Semi-Persistent Scheduling (SPS). Furthermore, configured grant-based UL transmission may be referred to as UL SPS. In the present disclosure, a "configured grant" may be interchangeably read as "SPS", an "SPS/configured grant" and so on.

Some types (such as type 1 and type 2) are studied for the configured grant-based transmission.

According to configured grant type 1 transmission (type 1 configured grant), parameters (that may be referred to as configured grant-based transmission parameters, configured grant parameters and so on) used for configured grant-based transmission are configured to the UE by using only a higher layer signaling.

According to configured grant type 2 transmission (type 2 configured grant), configuration information (parameters or configured grant parameters) for a configured grant is configured to the UE by a higher layer signaling. According to the configured grant type 2 transmission, at least part of the configured grant parameters may be notified to the UE by a physical layer signaling (e.g., Downlink Control Information (DCI) for activation described below).

The configured grant parameters may be configured to the UE by using an information element *"ConfiguredGrantConfig"* of a higher layer (e.g., RRC). The configured grant parameters may include information that specifies, for example, a configured grant resource. The configured grant parameters may include information related to, for example, a configured grant index, a time offset, a periodicity, the number of times of repeated transmission (the number of times of repeated transmission may be expressed as K) of Transport Blocks (TBs), a Redundancy Version (RV) sequence used for repeated transmission, a timer and so on.

In this regard, the periodicity and the time offset may be each expressed in a unit of symbols, slots, subframes, frames and so on. The periodicity may be expressed as, for example, a given number of symbols. The time offset may be expressed as, for example, an offset from a timing of a given index (such as slot number = 0 and/or system frame number = 0 and so on). The number of times of repeated transmission may be an arbitrary integer, and may be, for example, 1, 2, 4, 8 and so on. When the number of times of repeated transmission is n (> 0), the UE may perform configured grant-based PUSCH transmission of given TBs by using n transmission occasions.

When the configured grant type 1 transmission is configured to the UE, the UE may decide that one or a plurality of configured grants have been triggered. The UE may perform PUSCH transmission without a dynamic grant by using a configured resource for configured grant-based transmission (that may be referred to as, for example, a configured grant resource, a transmission occasion and so on). Note that, when configured grant-based transmission is configured, and when there is no data in a transmission buffer, the UE may skip the configured grant-based transmission.

When the configured grant type 2 transmission is configured to the UE, and a given activation signal is notified to the UE, the UE may decide that one or a plurality of configured grants have been triggered (or activated). The given activation signal (e.g., activation DCI) may be DCI (PDCCH) to be Cyclic Redundancy Check (CRC)-scrambled by a given identifier (e.g., CS-RNTI: Configured Scheduling Radio Network Temporary Identifier). Note that, the DCI may be used to control deactivation, retransmission and so on of a configured grant.

The UE may decide based on the above given activation signal whether or not to perform PUSCH transmission by using a configured grant resource configured by a higher layer. The UE may release (that may be referred to as deactivate) a resource (PUSCH) associated with the configured grant based on DCI for deactivating the configured grant or an expiration of a given timer (a lapse of a given time).

The UE may perform PUSCH transmission without a dynamic grant by using an activated resource for configured grant-based transmission (that may be referred to as a configured grant resource, a transmission occasion and so on). Note that, even when the configured grant-based transmission is activated (or in an activated state), and when there is no data in the transmission buffer, the UE may skip the configured grant-based transmission.

In addition, each of a dynamic grant and a configured grant may be referred to as an actual UL grant or a DL assignment. That is, the actual UL grant may be a higher layer signaling (e.g., Information Element (IE) *"ConfiguredGrantConfig"),* a physical layer signaling (e.g., the above given activation signal), or a combination thereof.

By the way, it is studied for 3GPP Rel. 16 that one or more configured grants are configured to the UE in one cell (also referred to as a serving cell, a carrier and so on) or one BandWidth Part (a BWP or a partial band).

Furthermore, it is also studied to simultaneously activate configurations of one or more configured grants (also referred to as Configured Grant (CG) configurations, CG configurations and so on) in one cell or one BWP. For example, following use cases 1 and 2 are assumed as use cases where one or more configured grant configurations are configured or activated in one cell or one BWP.

### <Use Case 1>

In use case 1, a plurality of configured grant configurations may be associated with different traffic types. The traffic types (also referred to as service types, traffic profiles and so on) may be Vehicle-to-Everything (V2X), Ultra Reliable and Low Latency Communications (URLLC), enhanced Mobile Broad Band (eMBB), voice (voice communication) and so on.

Note that, the traffic types may not be recognized by a lower layer (e.g., a physical layer, an MAC layer and so on), and may be recognized by a higher layer (e.g., a Service Data Adaptation Protocol (SDAP) layer).

In the lower layer, the traffic types may be recognized based on at least one of communication requirements (requirements for latency, an error rate and so on), a data type (voice, data and so on) and a parameter used for transmission or reception (e.g., a Modulation and Coding Scheme (MCS) table, a Radio Network Temporary Identifier (RNTI) used to scramble (CRC-scramble) a Cyclic Redundancy Check (CRC) bit), a DCI format, a DCI format size and so on).

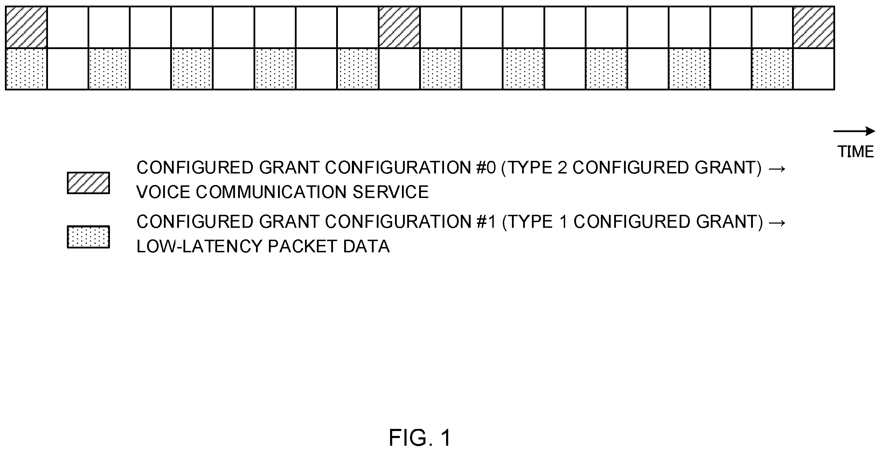

Fig. 1 is a diagram illustrating one example of use case 1 of a plurality of configured grant configurations. Fig. 1 illustrates one example where different configured grant configurations are configured to a plurality of traffic types (e.g., data for a voice communication service and packet data (low-latency packet data) for which low-latency is requested), and are simultaneously activated.

The different traffic types include different requirements for at least one of a different arrival periodicity of a traffic, a profile, a packet size, reliability and latency. Hence, a configured grant configuration having a parameter setting per traffic type may be configured.

For example, in a configured grant configuration #0 in Fig. 1, a frequency domain resource (e.g., one or more resource blocks (PRBs: Physical Resource Blocks) or one or more Resource Block Groups (RBGs)) for a PUSCH having a periodicity longer than that of a configured grant configuration #1 may be reserved.

Furthermore, in the configured grant configurations #0 and #1 in Fig. 1, one transmission duration (a length or a transmission occasion) may include a given number of symbols or slots. Note that, the configured grant configurations #0 and #1 may not be applied repetition (a repetition factor or aggregation factor = 1), yet may be applied a given number of times K of repetition (the repetition factor or aggregation factor > 1).

In Fig. 1, the configured grant configuration #0 may be used for a traffic type such as voice whose requirement related to low-latency is not relatively strict. The configured grant configuration #1 may be used for a traffic type whose requirement related to low-latency is relatively strict.

As illustrated in Fig. 1, a plurality of configured grant configurations to be configured to the same cell or BWP may be different types. For example, in Fig. 1, the configured grant configuration #0 may be the type 2 configured grant whose activation or deactivation is controlled by DCI. On the other hand, the configured grant configuration #1 may be the type 1 configured grant whose activation or deactivation is controlled by DCI.

Note that, although not illustrated, a plurality of configured grant configurations of an identical type may be configured to the same cell or BWP. For example, a plurality of configured grant configurations of the type 1 configured grant may be configured to the same cell or BWP. Furthermore, a plurality of configured grant configurations of the type 2 configured grant may be configured to the same cell or BWP, and at least one of a plurality of these configured grant configurations may be activated.

### <Use Case 2>

In use case 2, starting positions of a plurality of configured grant configurations may be shifted to realize low-latency. In use case 2, the given number of times K (also referred to as the repetition factor K, the aggregation factor K and so on) of repetition may be applied to each configured grant configuration to improve reliability.

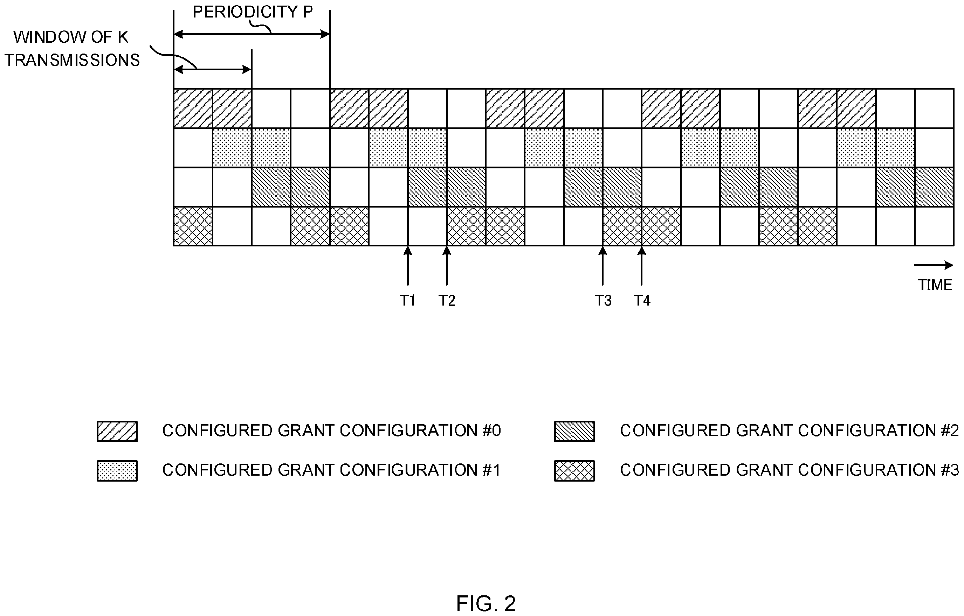

Fig. 2 is a diagram illustrating one example of use case 2 of a plurality of configured grant configurations. Fig. 2 illustrates one example where a plurality of configured grant configurations (e.g., four configured grant configurations #0 to #3) of a certain traffic type are configured to a certain cell or BWP, and the given number of times K (e.g., K = 2) of repetition is applied.

As illustrated in Fig. 2, a starting position of initial transmission (initial transmission occasion) of the given number of times K of repetition may be shifted between a plurality of configured grant configurations. For example, in Fig. 2, the starting position of the initial transmission occasion is each shifted per transmission occasion between the configured grant configurations #0 and #3. Note that, one transmission occasion may include a given number of symbols or slots.

One or more parameters may be commonalized between a plurality of configured grant configurations. The parameter that is commonalized between a plurality of configured grant configurations may be at least one of, for example, an MCS index, a Transport Block Size (TBS), Multiple Input Multiple Output (MIMO), a Demodulation Reference Signal (DMRS) configuration, frequency domain resource allocation, time domain resource allocation, a periodicity, the repetition factor K, an MCS table, transform precoding, an RBG size (the number of PRBs per RBG), a transmission power control parameter, an RNTI, an HARQ Process Number (HPN), an HPN offset, and a configured grant configuration index (Identifier (ID)).

On the other hand, one or more parameters may be individually configured between a plurality of configured grant configurations. A parameter of each configured grant configuration may include, for example, an offset (also referred to as a time offset, a start timing, a start time offset and so on) that indicates a starting position of an initial transmission occasion.

In use case 2, a plurality of configured grant configurations may be an identical type. For example, in Fig. 2, all of the configured grant configurations #0 to #3 may be the type 1 configured grant or the type 2 configured grant. In a case of the type 2 configured grant, at least one of the configured grant configurations #0 to #3 may be activated.

In Fig. 2, when UL data (traffic) occurs, the UE may transmit the UL data by using a configured grant configuration that makes it possible to perform transmission at the earliest time among a plurality of configured grant configurations. When, for example, the UL data occurs in a duration of timings T1 to T2 in Fig. 2 (or when data transmission is ready), the UE transmits the UL data by using the configured grant configuration #3. Furthermore, when the UL data is generated in a duration of timings T3 to T4 (or when data transmission is ready), the UE transmits the UL data by using the configured grant configuration #0.

Thus, when a plurality of configured grant configurations of different transmission occasion starting positions (transmission start timings) are configured, it is possible to suppress latency from occurrence of UL data to transmission of the UL data by using (selecting) a configured grant configuration that matches an occurrence timing of the UL data.

One configured grant configuration can enhance reliability by performing repetition, yet cannot make a periodicity of the configured grant configuration shorter than a repetition time duration (periodicity P). On the other hand, according to the example in Fig. 2, it is possible to suppress latency equivalently to latency obtained by making the periodicity of the configured grant configuration shorter than the repetition time duration while enhancing reliability by performing repetition.

As described above, when one or more configured grant configurations are configured or activated in one cell or BWP, how to identify the configured grant configurations, and how to control at least one of activation and deactivation (activation/deactivation) of at least one of the configured grant configurations matter.

Furthermore, how to identify a legacy configured grant configuration (e.g., a configured grant configuration supported by 3GPP Rel. 15) and a new configured grant configuration (e.g., a configured grant configuration introduced by 3GPP Rel. 16) also matter.

When it is not possible to appropriately identify a plurality of configured grant configurations to be configured to one cell or BWP, or when it is not possible to appropriately control activation/deactivation of at least one of a plurality of these configured grant configurations, there is a risk that the UE cannot appropriately control communication that uses a plurality of configured grant configurations in, for example, above-described use cases 1 and 2.

Hence, the inventors of the present disclosure have studied a method for identifying one or more configured grant configurations to be configured to the UE (first aspect), a method for controlling activation/deactivation of at least one of the configured grant configurations (second aspect), and a method for identifying the legacy configured grant configuration and the new configured grant configuration (third aspect), and reached the present invention.

An embodiment according to the present disclosure will be described in detail below with reference to the drawings. Note that, a combination of at least one feature of first to third aspects is applicable. Furthermore, in the present embodiment, "one or more" may mean any one of one and plural.

A "configured grant" may be interchangeably read as a "configuration of configured grants" or a "configured grant configuration" below. Furthermore, "determining a configured grant for performing configured grant-based transmission" may be simply read as "selecting a configured grant". Furthermore, a "traffic" may be interchangeably read as at least one of "data", "UL data" and a "transport block".

A "carrier" may be interchangeably read as a "cell" or a "Component Carrier (CC)" below.

The following embodiment will mainly describe an example where the embodiment is applied to UL, yet may be applied to DL. For example, an operation of the type 2 configured grant (or a type 3 configured grant) is applicable to a PDSCH (an SPS PDSCH or downlink SPS), too. A "configured grant configuration (ConfiguredGrantConfig)" may be read as an "SPS configuration (SPS-Config)". "Transmission of a configured grant PUSCH" may be read as "reception of an SPS PDSCH".

### (First Aspect)

The first aspect will describe differentiation of one or more configured grant configurations or one or more configured grant sets to be configured to a UE. The configured grant set is a set including one or more configured grant configurations, and is also referred to as a group, a configuration group, a configured grant configuration group and so on.

More specifically, the first aspect will describe differentiation that uses indices of the configured grant configurations or the configured grant sets (first differentiation), RNTIs (second differentiation) or one or more parameters (third differentiation).

### <First Differentiation>

The UE may differentiate one or more configured grant configurations to be configured to the UE, based on an index of each configured grant configuration. The index is also referred to as a configuration index, a configured grant configuration index, an identifier (ID), a configuration ID, a configured grant configuration ID and so on.

Alternatively, the UE may differentiate one or more configured grant sets to be configured to the UE, based on indices of the one or more configured grant sets. The index is also referred to as a configured grant set index, a set index, a group index, a configuration group index, an identifier (ID), a configured grant set ID, a set ID, a group ID, a configuration group ID and so on.

### «Differentiation of Configured Grant Configurations»

Each configured grant configuration may have one configuration index. When a plurality of configured grant configurations are configured to the UE, a plurality of these configured grant configurations may respectively have different configuration indices (configuration index values). Alternatively, at least two of a plurality of these configured grant configurations may have an identical configuration index (configuration index value).

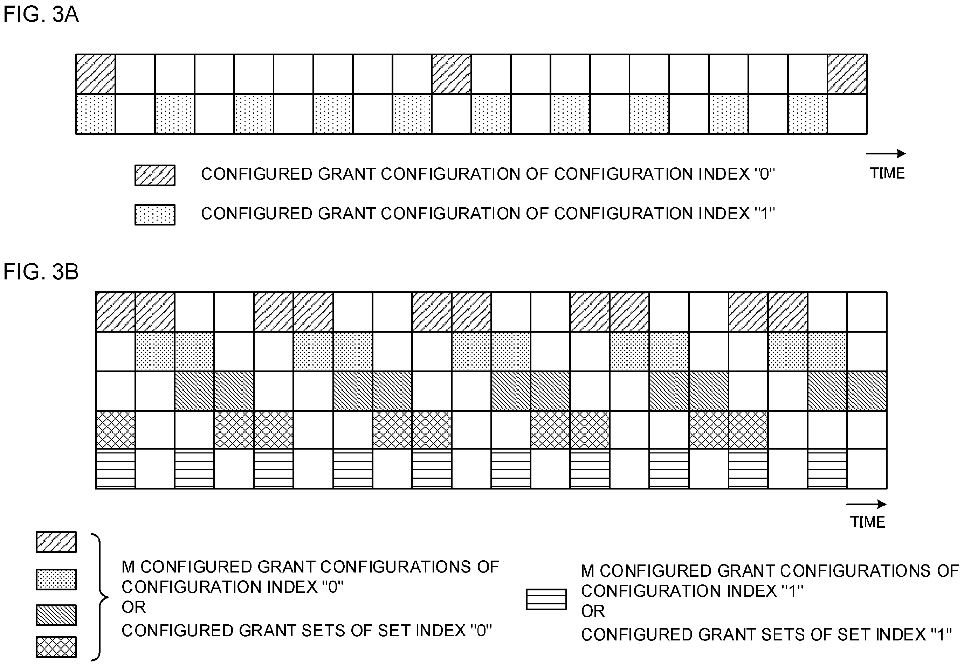

Figs. 3A and 3B are diagrams illustrating one example of first differentiation of configured grant configurations according to the first aspect. In, for example, use case 1 illustrated in Fig. 3A, the UE may differentiate a plurality of configured grant configurations configured for different traffic types by respectively using configuration indices of different values.

Furthermore, in use case 2 illustrated in Fig. 3B, M (M ≥ 1) configured grant configurations belonging to an identical traffic type may have configuration indices of an identical value, or may have configuration indices of different values. In, for example, Fig. 3B, M = 4 configured grant configurations are configured for a certain traffic type, and M = 1 configured grant configurations are configured for another traffic type.

In Fig. 3B, the M configured grant configurations belonging to the identical traffic type may have the configuration indices of the identical value, or may have the configuration indices of the different values. In, for example, Fig. 3B, the 4 configured grant configurations have an identical configuration index "0", and the one configured grant configuration has a configuration index "1".

### <<Differentiation of Configured Grant Sets>>

Each configured grant set may have one set index. When one or more configured grant sets are configured to the UE, each configured grant set may have a different set index (set index value).

In, for example, use case 2 illustrated in Fig. 3B, two configured grant sets may be configured to the UE. Each configured grant set may be differentiated based on the set index. In, for example, Fig. 3B, the configured grant sets including four configured grant configurations have a set index "0", and the configured grant sets including one configured grant configuration have a set index "1".

Note that, M configured grant configurations in each configured grant set may be differentiated based on the above-described configuration indices.

### <Second Differentiation>

The UE may differentiate one or more configured grant configurations to be configured to the UE, based on an RNTI of each configured grant configuration. The RNTI may be used to, for example, CRC-scramble DCI used to control activation or deactivation of each configured grant configuration. Furthermore, the RNTI may be used to CRC-scramble data of each configured grant configuration.

Alternatively, the UE may differentiate one or more configured grant sets to be configured to the UE, based on RNTIs of one or more configured grant sets. The RNTI may be used to, for example, CRC-scramble DCI used to control activation or deactivation of each configured grant set.

### «Differentiation of Configured Grant Configurations»

Each configured grant configuration may have one RNTI. When a plurality of configured grant configurations are configured to the UE, a plurality of these configured grant configurations may respectively have different RNTIs (RNTI values). Alternatively, at least two of a plurality of these configured grant configurations may have an identical RNTI (RNTI value).

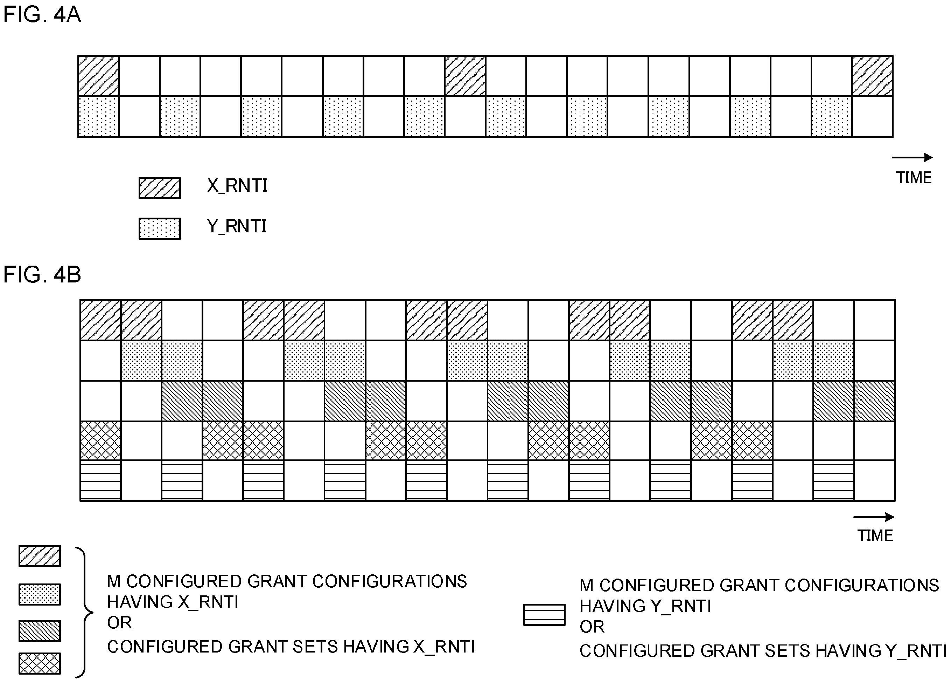

Figs. 4A and 4B are diagrams illustrating one example of second differentiation of configured grant configurations according to the first aspect. In, for example, use case 1 illustrated in Fig. 4A, the UE may differentiate a plurality of configured grant configurations configured for different traffic types by respectively using different RNTIs.

The different RNTIs may be RNTIs of different types (e.g., an X_RNTI and a Y_RNTI in Fig. 4A). Note that, "X" and "Y" of the X_RNTI and the Y_RNTI each only need to be one or more arbitrary strings, and only need to make it possible to identify the RNTIs of the different types. Alternatively, although not illustrated, the different RNTIs may be RNTIs (e.g., X_RNTIs) of an identical type having different values.

Furthermore, in use case 2 illustrated in Fig. 4B, the M (M ≥ 1) configured grant configurations belonging to an identical traffic type may have an identical RNTI (or RNTI value), or may have different RNTIs (or RNTI values). In, for example, Fig. 4B, M = 4 configured grant configurations are configured for a certain traffic type, and M = 1 configured grant configurations are configured for another traffic type.

In Fig. 4B, the M configured grant configurations belonging to the identical traffic type may have the identical RNTI (or RNTI value), or may have the different RNTIs (or RNTI values). In, for example, Fig. 4B, the four configured grant configurations have the X RNTI, and the one configured grant configuration has the Y_RNTI. Note that, the X RNTI and the Y_RNTI may be RNTIs of different types, or may be RNTIs of an identical type and different values.

### <<Differentiation of Configured Grant Sets>>

Each configured grant set may have one RNTI. When one or more configured grant sets are configured to the UE, each configured grant set may have a different RNTI (RNTI value).

In, for example, use case 2 illustrated in Fig. 4B, two configured grant sets may be configured to the UE. Each configured grant set may be differentiated based on an RNTI. In, for example, Fig. 4B, the configured grant sets including the four configured grant configurations have the X_RNTIs, and the configured grant sets including one configured grant configuration have the Y_RNTIs.

Note that, the M configured grant configurations in each configured grant set may be differentiated based on the above-described configuration indices or RNTIs. An RNTI used to differentiate each configured grant set and an RNTI used to differentiate each configured grant configuration in each configured grant set may be different types or values.

### <Third Differentiation>

The UE may differentiate one or more configured grant configurations to be configured to the UE, based on one or more parameters (e.g., one or more parameters that indicate an index of each configured grant configuration). The one or more parameters may be at least ones of newly specified parameters and legacy parameters.

Alternatively, the UE may differentiate one or more configured grant sets to be configured to the UE, based on one or more parameters (e.g., one or more parameters that indicate an index of each configured grant set). The one or more parameters may be at least ones of newly specified parameters and legacy parameters.

For example, the one or more parameters used to differentiate each configured grant configuration may include an HARQ Process Number (HPN) allocated to each configured grant configuration, an HARQ ID or an HARQ process ID.

Similarly, the one or more parameters used to differentiate each configured grant set may include an HARQ Process Number (HPN) allocated to each configured grant configuration, an HARQ ID or an HARQ process ID.

According to the first aspect, it is possible to appropriately differentiate one or more configured grant configurations or one or more configured grant sets to be configured to the UE.

### (Second Aspect)

The second aspect will describe control of activation or deactivation of one or more configured grant configurations or one or more configured grant sets to be configured to a UE.

The UE may control activation or deactivation of the one or more configured grant configurations or the one or more configured grant sets to be configured to the UE, based on DCI.

### <Activation Control>

Single DCI (e.g., a DCI format 0_0 or 0_1 on UL and a DCI format 1_0 or 1_1 on DL) may indicate activation of the one or more configured grant configurations or the one or more configured grant sets.

### «Case Where Given Field Value in DCI Is Used»

The UE may determine the one or more configured grant configurations or the one or more configured grant sets to be activated, based on values (code points) of given bits (given bits of one or more fields) in the DCI.

The one or more fields may include at least ones of new fields and legacy fields. The legacy fields may be at least ones of, for example, HPN fields and Redundancy Version (RV) fields.

For example, each value of each given bit of the one or more fields in the DCI may indicate the one or more configuration indices (configured grant configurations) or the one or more set indices (configured grant sets). The configuration indices (configured grant configurations) or the set indices (configured grant sets) indicated by each value may be configured to the UE by a higher layer signaling.

Furthermore, a specific value of each given bit of the one or more fields in the DCI may indicate all configured grant configurations or configured grant sets to be configured to the UE.

Note that , when an identical configuration index is shared between a plurality of configured grant configurations, the configuration index may be set to the specific value (e.g., "0" in Fig. 3B). The specific value may be configured by a higher layer signaling, or may be pre-defined.

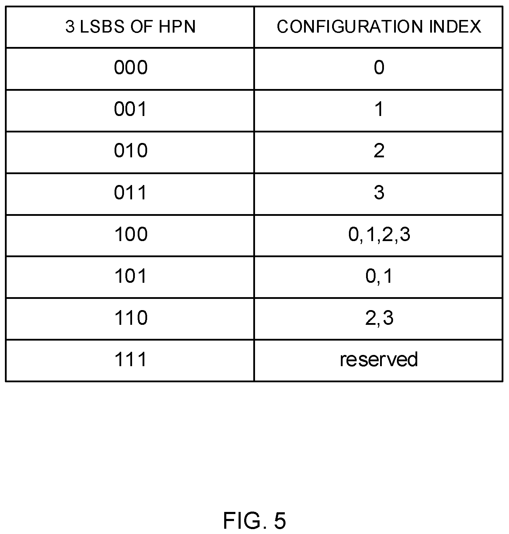

Fig. 5 is a diagram illustrating one example of values of one or more fields in DCI according to the second aspect. Fig. 5 illustrates one example where values (code points) of given bits (e.g., 3 LSBs) of an HPN field in the DCI indicate configuration indices.

In, for example, Fig. 5, a plurality of configured grant configurations that are identified based on configuration indices "0" to "3" are configured to the UE. Note that, as illustrated in Fig. 3B, one configuration index value may be associated with one or more configured grant configurations.

As illustrated in, for example, Fig. 5, values "000" to "011" of the 3 LSBs of the HPN field each indicate a single configuration index. Furthermore, the value "100" indicates configuration indices of all configured grant configurations to be configured to the UE. Furthermore, the values "101" and "110" each indicate a plurality of configuration indices.

In this regard, Fig. 5 is only exemplary, and each code point of the given bit of any field in DCI may indicate one or more configuration indices (configured grant configurations). Furthermore, each value of the given bit of any field in the DCI may indicate one or more set indices (configured grant sets).

Furthermore, each value of the given bit of a first field in DCI may indicate one or more set indices (configured grant sets), and each value of a given bit of a second field in the DCI may indicate one or more configuration indices (configured grant configurations). Consequently, it is possible to control activation not only per configured grant set, but also per configured grant configuration in each configured grant set.

### «Case Where DCI Format Is Used»

The UE may determine the one or more configured grant configurations or the one or more configured grant sets to be activated, based on a specific DCI format.

For example, the specific DCI format (e.g., the DCI format 0_0 on UL and the DCI format 1_0 on DL) may be used to activate all configured grant configurations or all configured grant sets to be configured to the UE.

On the other hand, another DCI format (e.g., the DCI format 0_1 on UL and the DCI format 1_1 on DL) may be used to activate specific configured grant configurations or specific configured grant sets to be configured to the UE. The specific configured grant configurations or the specific configured grant sets may be indicated by values of given bits of one or more fields in the another DCI format.

### <Deactivation Control>

The UE may control deactivation of one or more configured grant configurations or one or more configured grant sets to be configured to the UE, based on a specific DCI format (e.g., at least one of the DCI formats 0_0 and 0_1 on UL and at least one of the DCI formats 1_0 and 1_1 on DL).

Furthermore, single DCI (e.g., the DCI format 0_0 or 0_1 on UL and the DCI format 1_0 or 1_1 on DL) may indicate deactivation of the one or more configured grant configurations or the one or more configured grant sets.

### «Case Where Given Field Value in DCI Is Used»

The UE may determine the one or more configured grant configurations or the one or more configured grant sets to be deactivated, based on values (code points) of given bits of one or more fields in the DCI. The one or more fields may include at least ones of new fields and legacy fields. The legacy fields may be at least ones of, for example, HPN fields and RV fields.

For example, each value of each given bit of the one or more fields in the DCI may indicate the one or more configuration indices (configured grant configurations) or the one or more set indices (configured grant sets). The configuration indices (configured grant configurations) or the set indices (configured grant sets) indicated by each value may be configured to the UE by a higher layer signaling.

Furthermore, a specific value of given bits of the one or more fields in the DCI may indicate all configured grant configurations or configured grant sets to be configured to the UE.

Note that, when an identical configuration index is shared between a plurality of configured grant configurations, the configuration index may be set to the specific value (e.g., "0" in Fig. 3B). The specific value may be configured by a higher layer signaling, or may be pre-defined.

Furthermore, each value of the given bit of a first field in DCI may indicate one or more set indices (configured grant sets), and each value of a given bit of a second field in the DCI may indicate one or more configuration indices (configured grant configurations). Consequently, it is possible to control deactivation not only per configured grant set, but also per configured grant configuration in each configured grant set.

### «Case Where DCI Format Is Used»

The UE may determine the one or more configured grant configurations or the one or more configured grant sets to be deactivated, based on a specific DCI format.

For example, the specific DCI format (e.g., the DCI format 0_0 on UL and the DCI format 1_0 on DL) may be used to deactivate all configured grant configurations or all configured grant sets to be configured to the UE.

On the other hand, another DCI format (e.g., the DCI format 0_1 on UL and the DCI format 1_1 on DL) may be used to deactivate specific configured grant configurations or specific configured grant sets to be configured to the UE. The specific configured grant configurations or the specific configured grant sets may be indicated by values of given bits of one or more fields in the another DCI format.

### <Others>

Note that, the number of bits (a bitwidth or a size) of one or more fields in DCI used for the above-described control of activation or deactivation may be configured by a higher layer signaling. Alternatively, the UE may determine the number of bits based on the number of configured grant configurations or the number of configured grant sets to be configured to the UE.

Furthermore, the UE may control, based on a given rule, mapping of each value (code point) of given bits of one or more fields in DCI used to control activation or deactivation, and configuration indices or set indices.

For example, each configuration index or each set index may be mapped on each code point in an ascending order of the configuration indices or the set indices configured by a higher layer signaling. As illustrated in Fig. 5, a plurality of configuration indices or set indices may be mapped on code points (e.g., "100", "101" and "110" in Fig. 5) that are left after the one configuration index or set index is mapped on the code point.

Furthermore, when a greater number of configuration indices or set indices than the number of above code points are configured by a higher layer signaling, the UE may select a configuration index or a set index to be mapped on each code point by using a given command (e.g., a selection command that uses a Medium Access Control Control Element (MAC Control Element (MAC CE))).

According to the second aspect, it is possible to appropriately control activation or deactivation of the one or more configured grant configurations or the one or more configured grant sets to be configured to the UE.

### (Third Aspect)

The third aspect will describe differentiation of configured grants for Rel. 15 (Rel. 15 CGs) and configured grants for Rel. 16 (Rel. 16 CGs) to be configured to a UE.

More specifically, the third aspect will describe differentiation of the Rel. 15 CGs and the Rel. 16 CGs that uses DCI formats (first differentiation) or RNTIs (second differentiation).

### <First Differentiation>

The UE may differentiate the Rel. 15 CGs and the Rel. 16 CGs based on at least one of a DCI format or a size of the DCI format.

A DCI format for the Rel. 15 CGs or a size of the DCI format for the Rel. 15 CGs is used for at least one of activation, deactivation and retransmission of the Rel. 15 CGs.

A different DCI format from the DCI format for the Rel. 15 CGs or the DCI format of a different size from that of the DCI format for the Rel. 15 CGs may be used for at least one of activation, deactivation and retransmission of the Rel. 16 CGs.

Note that, when the size of the DCI format for the Rel. 15 CGs after padding matches the size of the DCI format for the Rel. 16 CGs after padding, a given number of bits (e.g., 1 bit) may be added to the DCI format for the Rel. 16 CGs.

### <Second Differentiation>

The UE may differentiate the Rel. 15 CGs and the Rel. 16 CGs based on an RNTI used to CRC-scramble at least one of data and a DCI format.

The data for Rel. 15 CG transmission is CRC-scrambled by using a Configured Scheduling RNTI (CS-RNTI). Furthermore, a DCI format (e.g., DCI format 0_0 or 0_1) used for at least one of activation, deactivation and retransmission of the Rel. 15 CGs is CRC-scrambled by using the CS-RNTI.

The data for Rel. 16 CG transmission is CRC-scrambled by using a different RNTI from the CS-RNTI. Furthermore, a DCI format (e.g., DCI format 0_0 or 0_1) used for at least one of activation, deactivation and retransmission of the Rel. 16 CGs is CRC-scrambled by using the different RNTI from the CS-RNTI.

The different RNTI from the CS-RNTI may be a new RNTI different from an mcs-c-RNTI for URLLC according to Rel. 15. The new RNTI may be referred to as an X-RNTI (X is an arbitrary string).

### <Configuration of Parameter for Rel. 16 CGs>

In a case of the Rel. 15 CGs, the UE may comply with a PUSCH configuration (e.g., Information Element (IE) "PUSCH-Config") configured by a higher layer for one or more parameters that are not included in a configured grant configuration (e.g., IE "ConfiguredGrantConfig") configured by the higher layer.

The parameters that are not included in the configured grant configuration of the Rel. 15 CGs may include at least one of, for example, following (1) to (6).
(1) An identifier (IE "dataScramblingIdentityPUSCH") for initialization of data scrambling (c init) for the PUSCH,
(2) A parameter (an IE "txConfig" or an IE "ulTxConfig") that indicates which one of codebook-based transmission and non-codebook-based transmission the UE uses,
(3) Information (an IE "codebookSubset" or an L1 parameter "ULCodebookSubset") that indicates a subset of a Precoding Matrix Indicator (PMI) addressed by a Transmitted Precoding Matrix Indicator (TPMI),
(4) Information (an IE "maxRank" or an IE "ULmaxRank") that indicates a subset of the PMI addressed by a TRI,
(5) Information (an IE "UCI-OnPUSCH" or an L1 parameter "UCI-on-PUSCH") that relates to transmission of UCI that uses the PUSCH (e.g., a beta offset and a scaling factor for restricting the number of resource elements allocated to the UCI transmitted by the PUSCH), and
(6) Information (an IE "tp-pi2BPSK" or an L1 parameter "PUSCH-tp") that relates to UE-specific selection of a transform precoder of the PUSCH.

On the other hand, a PUSCH for the Rel. 16 CGs may be configured by using a parameter provided by the configured grant configuration for the Rel. 16 CGs. For example, at least one parameter of above (1) to (6) may not be used for the Rel. 16 CGs. At least one parameter of above-described (1) to (6) may be included in the configured grant configuration for the Rel. 16 CGs, or may be pre-defined by a specification.

Alternatively, in a case of the Rel. 16 CGs, too, one or more parameters that are not provided by the configured grant configuration for the Rel. 16 CGs may comply with a PUSCH configuration (e.g., IE "PUSCH-Config") configured by a higher layer. For example, at least one parameter of above-described (1) to (6) may be included in the PUSCH configuration according to Rel. 16.

According to the third aspect, it is possible to appropriately differentiate the Rel. 15 CGs and the Rel. 16 CGs to be configured to the UE, and the UE that supports the Rel. 15 CGs and the Rel. 16 CGs can appropriately perform communication that uses configured grants.

### (Radio Communication System)

The configuration of the radio communication system according to one embodiment of the present disclosure will be described below. This radio communication system uses one or a combination of the radio communication method according to each of the above embodiment of the present disclosure to perform communication.

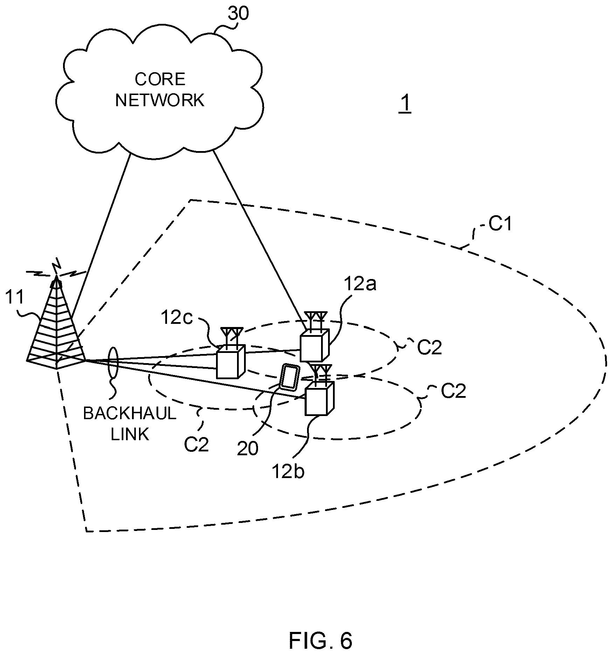

Fig. 6 is a diagram illustrating one example of a schematic configuration of the radio communication system according to the one embodiment. A radio communication system 1 may be a system that realizes communication by using Long Term Evolution (LTE), the 5th generation mobile communication system New Radio (5G NR) and so on, specified by the Third Generation Partnership Project (3GPP).

Furthermore, the radio communication system 1 may support dual connectivity (Multi-RAT Dual Connectivity (MR-DC)) between a plurality of Radio Access Technologies (RATs). MR-DC may include dual connectivity (EN-DC: E-UTRA-NR Dual Connectivity) of LTE (E-UTRA: Evolved Universal Terrestrial Radio Access) and NR, and dual connectivity (NE-DC: NR-E-UTRA Dual Connectivity) of NR and LTE, and so on.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NN-DC: NR-NR Dual Connectivity) where both of the MN and the SN are base stations (gNBs) according to NR).

The radio communication system 1 includes a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 6. The base stations 11 and 12 will be collectively referred to as a base station 10 below when not distinguished.

The user terminal 20 may connect with at least one of a plurality of base stations 10. The user terminal 20 may use at least one of Carrier Aggregation and Dual Connectivity (DC) that use a plurality of Component Carriers (CCs).

Each CC may be included in at least one of a first frequency range (FR1: Frequency Range 1) and a second frequency range (FR2: Frequency Range 2). The macro cell C1 may be included in the FR1, and the small cell C2 may be included in the FR2. For example, the FR1 may be a frequency range equal to or less than 6 GHz (sub-6 GHz), and the FR2 may be a frequency range higher than 24 GHz (above-24 GHz). Note that, the frequency ranges and definitions of the FR1 and the FR2 are not limited to these, and for example, the FR1 may correspond to a frequency range higher than the FR2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI), an X2 interface and so on) or radio connection (e.g., NR communication). When, for example, NR communication is used as backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN), a Next Generation Core (NGC) and so on.

The user terminal 20 is a terminal that supports at least one of communication schemes such as LTE, LTE-A, 5G and so on.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA) and so on may be used.

The radio access scheme may be referred to as a waveform. Note that, the radio communication system 1 may use another radio access scheme (e.g., another single carrier transmission scheme or another multicarrier transmission scheme) as the radio access scheme on UL and DL.

The radio communication system 1 may use a downlink shared channel (PDSCH: Physical Downlink Shared Channel) shared by each user terminal 20, a broadcast channel (PBCH: Physical Broadcast Channel), a downlink control channel (PDCCH: Physical Downlink Control Channel) and so on as downlink channels.

Furthermore, the radio communication system 1 uses an uplink shared channel (PUSCH: Physical Uplink Shared Channel) shared by each user terminal 20, an uplink control channel (PUCCH: Physical Uplink Control Channel), a random access channel (PRACH: Physical Random Access Channel) and so on as uplink channels.

User data, higher layer control information, a System Information Block (SIB) and so on are transmitted on the PDSCH. The user data, the higher layer control information and so on may be transmitted on the PUSCH. Furthermore, a Master Information Block (MIB) may be conveyed on the PBCH.

Lower layer control information may be transmitted on the PDCCH. The lower layer control information may include, for example, Downlink Control Information (DCI) including scheduling information of at least one of the PDSCH and the PUSCH.

Note that, DCI for scheduling the PDSCH may be referred to as, for example, a DL assignment, DL DCI and so on, and DCI for scheduling the PUSCH may be referred to as a UL grant, UL DCI and so on. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One SS may be associated with a PDCCH candidate corresponding to one or a plurality of aggregation levels. One or a plurality of search spaces may be referred to as a search space set. Note that, a "search space", a "search space set", a "search space configuration", a "search space set configuration", a "CORESET", a "CORESET configuration" and so on in the present disclosure may be interchangeably read.

Channel State Information (CSI), transmission acknowledgement information (that may be referred to as Hybrid Automatic Repeat reQuest ACKnowledgement (HARQ-ACK), ACK/NACK and so on), a Scheduling Request (SR) and so on may be transmitted on the PUCCH. A random access preamble for establishing connection with a cell may be transmitted on the PRACH.

In addition, downlink and uplink in the present disclosure may be expressed without adding "link" thereto. Furthermore, various channels may be expressed without adding "physical" to heads of the various channels.

The radio communication system 1 may transmit a Synchronization Signal (SS) a Downlink Reference Signal (DL-RS) and so on. The radio communication system 1 may transmit a Cell-specific Reference Signal (CRS), a Channel State Information Reference Signal (CSI-RS), a DeModulation Reference Signal (DMRS), a Positioning Reference Signal (PRS), a Phase Tracking Reference Signal (PTRS) and so on as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as an SS/PBCH block, an SS Block (SSB) and so on. In addition, the SS, the SSB and so on may be also referred to as reference signals.

Furthermore, the radio communication system 1 may transmit a Sounding Reference Signal (SRS), a DeModulation Reference Signal (DMRS) and so on as UpLink Reference Signals (UL-RSs). In this regard, the DMRS may be referred to as a user terminal-specific reference signal (UE-specific reference signal).

### (Base Station)

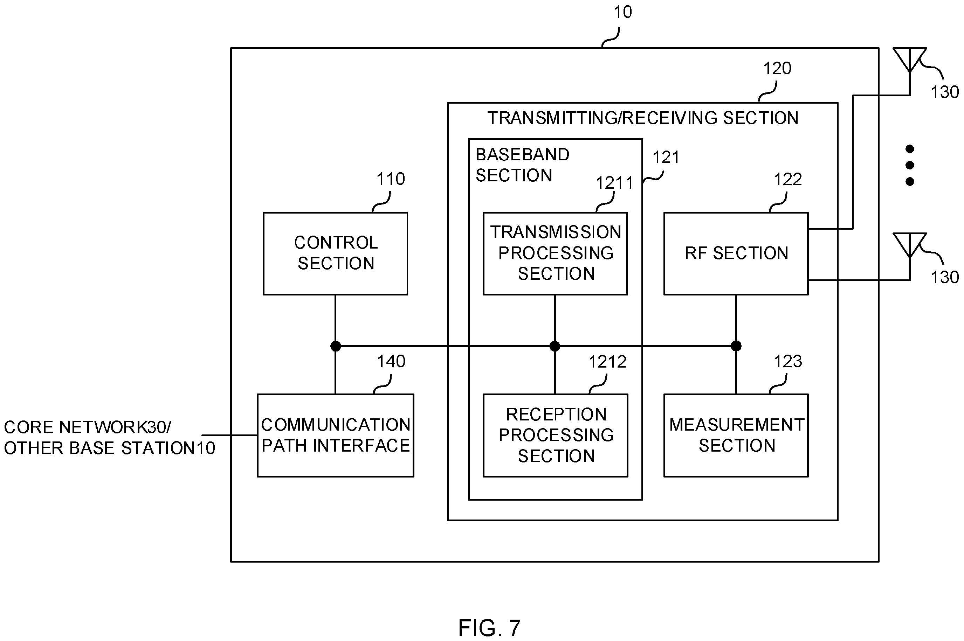

Fig. 7 is a diagram illustrating one example of a configuration of the base station according to the one embodiment. The base station 10 includes a control section 110, a transmitting/receiving section 120, transmission/reception antennas 130 and a communication path interface 140. Note that, the base station 10 may include one or more of each of the control sections 110, the transmitting/receiving sections 120, the transmission/reception antennas 130 and the communication path interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller, a control circuit and so on described based on the common knowledge in the technical field according to the present disclosure.

The control section 110 may control signal generation, scheduling (e.g., resource allocation or mapping) and so on. The control section 110 may control transmission/reception, measurement and so on that use the transmitting/receiving section 120, the transmission/reception antennas 130 and the communication path interface 140. The control section 110 may generate data, control information, a sequence and so on to be transmitted as a signal, and forward the signal to the transmitting/receiving section 120. The control section 110 may perform call processing (configuration, release and so on) of a communication channel, state management of the base station 10, radio resource management and so on.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit, a transmission/reception circuit and so on described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmission/reception antenna 130 can be composed of an antenna such an array antenna and so on described based on the common knowledge in the technical field according to the present disclosure.

The transmitting/receiving section 120 may transmit the above-described downlink channel, synchronization signal, downlink reference signal and so on. The transmitting/receiving section 120 may receive the above-described uplink channel, uplink reference signal and so on.

The transmitting/receiving section 120 may form at least one of a transmission beam and a reception beam by using digital beam forming (e.g., precoding), analog beam forming (e.g., phase rotation) and so on.

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) and so on, for the data, the control information and so on obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding, digital-analog conversion and so on, for the bit sequence to transmit, and output a baseband signal.

The transmitting/receiving section 120 (RF section 122) may modulate the baseband signal into a radio frequency range, perform filter processing, amplification and so on, for the signal, and transmit the signal of the radio frequency range via the transmission/reception antennas 130.

On the other hand, the transmitting/receiving section 120 (RF section 122) may perform amplification and filter processing for the signal of the radio frequency range received by the transmission/reception antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing, PDCP layer processing and so on to the obtained baseband signal, and obtain user data and so on.

The transmitting/receiving section 120 (measurement section 123) may perform measurement related to the received signal. For example, the measurement section 123 may perform Radio Resource Management (RRM) measurement, Channel State Information (CSI) measurement and so on based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)), channel information (e.g., CSI) and so on. The measurement section 123 may output a measurement result to the control section 110.

The communication path interface 140 may transmit and receive (backhaul signaling) signals to and from apparatuses, the other base stations 10 and so on included in the core network 30, and obtain and convey user data (user plane data) and control plane data for the user terminal 20.

Note that, the transmitting section and the receiving section of the base station 10 according to the present disclosure may be composed of at least one of the transmitting/receiving section 120, the transmission/reception antenna 130 and the communication path interface 140.

Note that, the transmitting/receiving section 120 may transmit one or more pieces of configured grant configuration information (configured grant configurations). Furthermore, the transmitting/receiving section 120 may transmit one or more sets (configured grant sets) each including the one or more pieces of configured grant configuration information. For example, the transmitting/receiving section 120 may transmit the pieces of configuration information or the sets by a higher layer signaling.

Furthermore, the transmitting/receiving section 120 may transmit downlink control information or an MAC CE for activation or deactivation of the configured grant configuration information.

In addition, the control section 110 may control differentiation of at least one of the one or more pieces of configured grant configuration information, and the sets including the one or more pieces of configured grant configuration information (first aspect).

More specifically, the control section 110 may control differentiation of at least one of the pieces of configuration information and the sets based on an index given to each of the pieces of configuration information or indices given to the sets (the first aspect and first differentiation).

Furthermore, the control section 110 may control differentiation of at least one of the pieces of configuration information and the sets based on a Radio Network Temporary Identifier (RNTI) used for each of the pieces of configuration information or Radio Network Temporary Identifiers (RNTIs) used for the sets (the first aspect and second differentiation).

Furthermore, the control section 110 may control activation or deactivation of at least one of the pieces of configuration information or the sets based on a value of a given bit in the downlink control information (second aspect).

Furthermore, the control section 110 may control mapping of each value of the given bit and the pieces of configuration information or the sets (second aspect).

Furthermore, the control section 110 may differentiate configured grant configuration information for a first release (e.g., Rel. 16) and configured grant configuration information for a second release (e.g., Rel. 15) based on at least one of a format and a size of the downlink control information used for each of the pieces of configuration information or the Radio Network Temporary Identifier (RNTI) used for each of the pieces of configuration information (third aspect).

### (User Terminal)

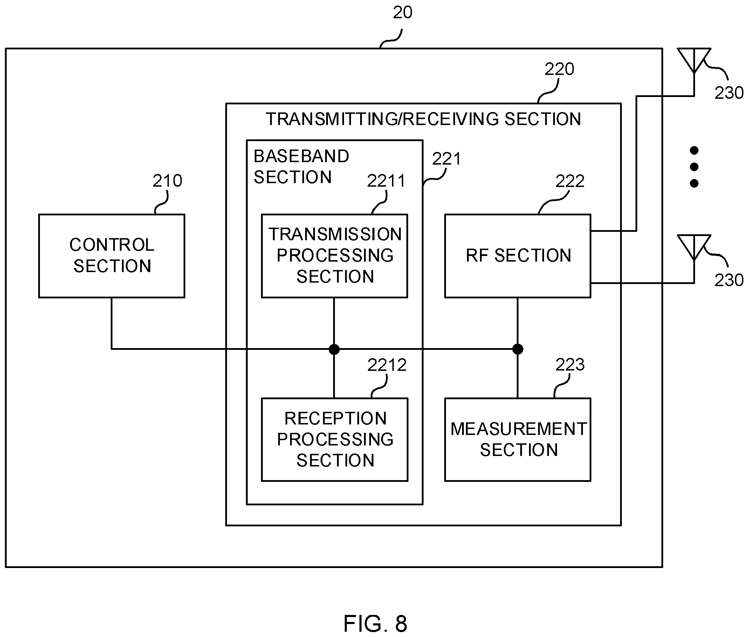

Fig. 8 is a diagram illustrating one example of a configuration of the user terminal according to the one embodiment. The user terminal 20 includes a control section 210, a transmitting/receiving section 220 and transmission/reception antennas 230. In this regard, the user terminal 20 may include one or more of each of the control sections 210, the transmitting/receiving sections 220 and the transmission/reception antennas 230.

Note that, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller, a control circuit and so on described based on the common knowledge in the technical field according to the present disclosure.

The control section 210 may control signal generation, mapping and so on. The control section 210 may control transmission/reception, measurement and so on that use the transmitting/receiving section 220 and the transmission/reception antennas 230. The control section 210 may generate data, control information, a sequence and so on to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit, a transmission/reception circuit and so on described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmission/reception antenna 230 can be composed of an antenna such an array antenna and so on described based on the common knowledge in the technical field according to the present disclosure.

The transmitting/receiving section 220 may receive the above-described downlink channel, synchronization signal, downlink reference signal and so on. The transmitting/receiving section 220 may transmit the above-described uplink channel, uplink reference signal and so on.

The transmitting/receiving section 220 may form at least one of a transmission beam and a reception beam by using digital beam forming (e.g., precoding), analog beam forming (e.g., phase rotation) and so on.

The transmitting/receiving section 220 (transmission processing section 2211) may perform PDCP layer processing, RLC layer processing (e.g., RLC retransmission control) and MAC layer processing (e.g., HARQ retransmission control) and so on, for the data, the control information and so on obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding, digital-analog conversion and so on, for the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing, amplification and so on, for the baseband signal, and transmit the signal of the radio frequency range via the transmission/reception antennas 230.

On the other hand, the transmitting/receiving section 220 (RF section 222) may perform amplification and filter processing on the signal of the radio frequency range received by the transmission/reception antennas 230, and demodulate the signal into a baseband signal, and so on.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing, PDCP layer processing and so on to the obtained baseband signal, and obtain user data and so on.

The transmitting/receiving section 220 (measurement section 223) may perform measurement related to the received signal. For example, the measurement section 223 may perform RRM measurement, CSI measurement and so on based on the received signal. The measurement section 223 may measure received power (e.g., RSRP), received quality (e.g., RSRQ, an SINR or an SNR), a signal strength (e.g., RSSI), channel information (e.g., CSI) and so on. The measurement section 223 may output a measurement result to the control section 210.

Note that, the transmitting section and the receiving section of the user terminal 20 according to the present disclosure may be composed of at least one of the transmitting/receiving section 220, the transmission/reception antenna 230 and the communication path interface 240.

Note that, the transmitting/receiving section 220 may receive the one or more pieces of configured grant configuration information. Furthermore, the transmitting/receiving section 220 may receive the one or more sets each including the one or more pieces of configured grant configuration information. For example, the transmitting/receiving section 220 may receive the pieces of configuration information or the sets by a higher layer signaling.

Furthermore, the transmitting/receiving section 220 may receive the downlink control information or the MAC CE for activation or deactivation of the configured grant configuration information.

Note that, the control section 210 may control differentiation of at least one of the one or more pieces of configured grant configuration information, and the sets including the one or more pieces of configured grant configuration information (first aspect).

More specifically, the control section 210 may control differentiation of at least one of the pieces of configuration information and the sets based on the index given to each of the pieces of configuration information or the indices given to the sets (the first aspect and first differentiation).

Furthermore, the control section 210 may control differentiation of at least one of the pieces of configuration information and the sets based on the Radio Network Temporary Identifier (RNTI) used for each of the pieces of configuration information or the Radio Network Temporary Identifiers (RNTIs) used for the sets (the first aspect and second differentiation).

Furthermore, the control section 210 may control activation or deactivation of at least one of the pieces of configuration information or the sets based on the value of the given bit in the downlink control information (second aspect).

Furthermore, the control section 210 may control mapping of each value of the given bit and the pieces of configuration information or the sets (second aspect).

Furthermore, the control section 210 may differentiate the configured grant configuration information for the first release (e.g., Rel. 16) and the configured grant configuration information for the second release (e.g., Rel. 15) based on at least one of the format and the size of the downlink control information used for each of the pieces of configuration information or the Radio Network Temporary Identifier (RNTI) used for each of the pieces of configuration information (third aspect).

### (Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection, radio connection and so on) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning and so on, yet are not limited to these. For example, a function block (component) that causes transmission to function may be referred to as a transmitting unit, a transmitter and so on. As described above, the method for realizing each function block is not limited in particular.

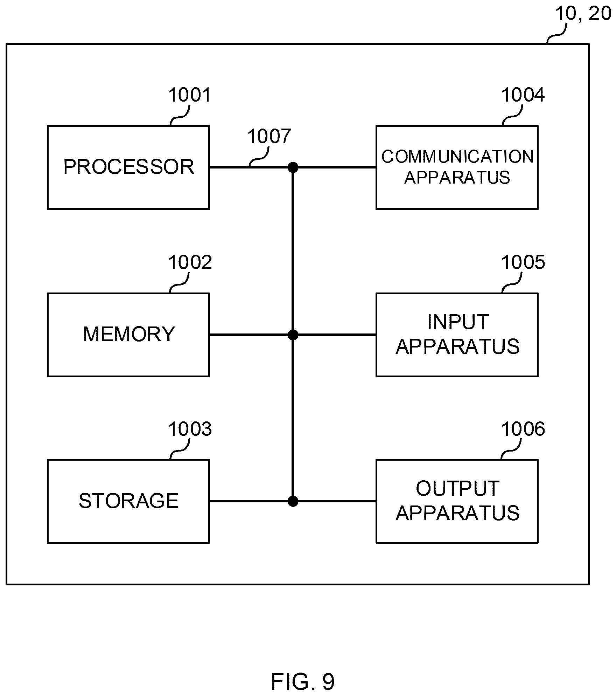

For example, the base station, the user terminal and so on according to the one embodiment of the present disclosure may function as computers that perform processing of the radio communication method according to the present disclosure. Fig. 9 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006, a bus 1007 and so on.

In this regard, words such as an apparatus, a circuit, a device, a section, a unit and so on in the present disclosure can be interchangeably read. The hardware configurations of the base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001, the memory 1002 and so on to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus, a register and so on. For example, at least part of the above-described control section 110 (210), transmitting/receiving section 120 (220) and so on may be realized by the processor 1001.

Furthermore, the processor 1001 reads programs (program codes), software modules, data and so on from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache, a main memory (main storage apparatus) and so on. The memory 1002 can store programs (program codes), software modules and so on that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM) and so on), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card, a communication module and so on. The communication apparatus 1004 may be configured to include a high frequency switch, a duplexer, a filter, a frequency synthesizer and so on to realize at least one of, for example, Frequency Division Duplex (FDD) and Time Division Duplex (TDD). For example, the above-described transmitting/receiving section 120 (220), transmission/reception antennas 130 (230) and so on may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button, a sensor and so on) that accepts an input from an outside. The output apparatus 1006 is an output device (e.g., a display, a speaker, a Light Emitting Diode (LED) lamp and so on) that sends an output to the outside. Note that, the input apparatus 1005 and the output apparatus 1006 may be an integrated component (e.g., touch panel).

Furthermore, each apparatus such as the processor 1001 or the memory 1002 and so on is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD), a Field Programmable Gate Array (FPGA) and so on. The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS (Reference Signal), or may be referred to as a pilot, a pilot signal and so on depending on standards to be applied. Furthermore, a Component Carrier (CC) may be referred to as a cell, a frequency carrier, a carrier frequency and so on.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, specific windowing processing performed by the transceiver in a time domain, and so on.

The slot may include one or a plurality of symbols (Orthogonal Frequency Division Multiplexing (OFDM) symbols, Single Carrier Frequency Division Multiple Access (SC-FDMA) symbols and so on) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for transmitting signals. The other corresponding names may be used for the radio frame, the subframe, the slot, the mini slot and the symbol. Note that, time units such as a frame, a subframe, a slot, a mini slot, a symbol and so on in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. Note that, a unit that indicates the TTI may be referred to as a slot, a mini slot and so on instead of a subframe.

In this regard, the TTI refers to, for example, a minimum time unit of scheduling of radio communication. For example, in the LTE system, the base station performs scheduling for allocating radio resources (a frequency bandwidth, transmission power and so on that can be used in each user terminal) in TTI units to each user terminal. In this regard, a definition of the TTI is not limited to this.

The TTI may be a transmission time unit of a channel-coded data packet (transport block), code block, codeword and so on, or may be a processing unit of scheduling, link adaptation and so on. In addition, when the TTI is given, a time period (e.g., the number of symbols) in which a transport block, a code block, a codeword and so on is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe, a slot and so on. A TTI shorter than the general TTI may be referred to as, for example, a reduced TTI, a short TTI, a partial or fractional TTI, a reduced subframe, a short subframe, a mini slot, a subslot, a slot and so on.

In addition, the long TTI (e.g., the general TTI, the subframe and so on) may be read as a TTI having a time duration exceeding 1 ms, and the short TTI (e.g., the reduced TTI and so on) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI, 1 subframe and so on may each include one or a plurality of resource blocks.

In this regard, one or a plurality of RBs may be referred to as, for example, a Physical Resource Block (PRB: Physical RB), a Sub-Carrier Group (SCG), a Resource Element Group (REG), a PRB pair, an RB pair and so on.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth and so on) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that given signals/channels are transmitted and received outside the active BWP. In addition, a "cell", a "carrier" and so on in the present disclosure may be read as a "BWP".

In this regard, structures of the above-described radio frame, subframe, slot, mini slot, symbol and so on are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length, a Cyclic Prefix (CP) length and so on can be variously changed.

Furthermore, the information, the parameters and so on described in the present disclosure may be expressed by using absolute values, may be expressed by using relative values with respect to given values or may be expressed by using other corresponding information. For example, a radio resource may be instructed by a given index.

Names used for parameters and so on in the present disclosure are in no respect restrictive names. Furthermore, numerical expressions and so on that use these parameters may be different from those explicitly disclosed in the present disclosure. Various channels (such as a Physical Uplink Control Channel (PUCCH), a Physical Downlink Control Channel (PDCCH) and so on) and information elements can be identified based on various suitable names. Therefore, various names assigned to these various channels and information elements are in no respect restrictive names.

The information, the signals and so on described in the present disclosure may be expressed by using one of various different techniques. For example, the data, the instructions, the commands, the information, the signals, the bits, the symbols, the chips and so on mentioned in the above entire description may be expressed as voltages, currents, electromagnetic waves, magnetic fields or magnetic particles, optical fields or photons, or arbitrary combinations of these.

Furthermore, the information, the signals and so on can be output at least one of from a higher layer to a lower layer and from the lower layer to the higher layer. The information, the signals and so on may be input and output via a plurality of network nodes.

The input and output information, signals and so on may be stored in a specific location (e.g., memory) or may be managed by using a management table. The information, signals and so on to be input and output can be overridden, updated or additionally written. The output information, signals and so on may be deleted. The input information, signals and so on may be transmitted to other apparatuses.

Notification of information is not limited to the aspects/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB), a System Information Block (SIB) and so on), and a Medium Access Control (MAC) signaling), other signals or combinations of these.

In addition, the physical layer signaling may be referred to as Layer 1/Layer 2 (L1/L2) control information (L1/L2 control signal), L1 control information (L1 control signal) and so on. Furthermore, the RRC signaling may be referred to as an RRC message, and may be, for example, an RRCConnectionSetup message an RRCConnectionReconfiguration message and so on. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure, a function and so on.

Furthermore, software, commands, information and so on may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs) and so on) and radio techniques (infrared rays, microwaves and so on), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI State)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element", a "panel" and so on can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier", a "component carrier" and so on can be interchangeably used. The base station is also referred to as terms such as a macro cell, a small cell, a femtocell, a picocell and so on.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)", "terminal" and so on can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus, a radio communication apparatus and so on. In addition, at least one of the base station and the mobile station may be, for example, a device mounted on a moving object or the moving object itself. The moving object may be a vehicle (e.g., a car, an airplane and so on), may be a moving object (e.g., a drone, a self-driving car and so on) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as Device-to-Device (D2D), Vehicle-to-Everything (V2X) and so on). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel, the downlink channel and so on may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs), Serving-Gateways (S-GWs) and so on, yet are not limited to these) other than the base stations or a combination of these.

Each aspect/embodiment described in the present disclosure may be used alone, may be used in combination or may be switched and used when carried out. Furthermore, orders of the processing procedures, the sequences, the flowchart and so on according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, next-generation systems that are enhanced based on these systems, and so on. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), ascertaining and so on.

Furthermore, "deciding (determining)" may be considered to "decide (determine)" receiving (e.g., receiving information), transmitting (e.g., transmitting information), input, output, accessing (e.g., accessing data in a memory) and so on.

Furthermore, "deciding (determining)" may be considered to "decide (determine)" resolving, selecting, choosing, establishing, comparing and so on. That is, "deciding (determining)" may be considered to "decide (determine)" some operation.

Furthermore, "deciding (determining)" may be read as "assuming", "expecting", "considering" and so on.

"Maximum transmit power" disclosed in the present disclosure may mean a maximum value of transmit power, may mean the nominal UE maximum transmit power, or may mean the rated UE maximum transmit power.

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables, printed electrical connection and so on, and by using electromagnetic energy and so on having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends to not be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a receiving section that receives pieces of configuration information of one or more configured grants; and
a control section that controls differentiation of at least one of the pieces of configuration information of the one or more configured grants and a set including the pieces of configuration information of the one or more configured grants.

2. The user terminal according to claim 1, wherein the control section controls the differentiation of at least one of the pieces of configuration information and the set based on an index given to each of the pieces of configuration information or an index given to the set.

3. The user terminal according to claim 1, wherein the control section controls the differentiation of at least one of the pieces of configuration information and the set based on a Radio Network Temporary Identifier (RNTI) used for each of the pieces of configuration information or a Radio Network Temporary Identifier (RNTI) used for the set.

4. The user terminal according to any one of claims 1 to 3, wherein the control section controls activation or deactivation of at least one of the pieces of configuration information or the set based on a value of a given bit in downlink control information.

5. The user terminal according to claim 4, wherein the control section controls mapping of each value of the given bit and the pieces of configuration information or the set.

6. The user terminal according to any one of claims 1 to 5, wherein
the pieces of configuration information of the one or more configured grants are configuration information of a configured grant for a first release, and
the control section differentiates the configuration information of the configured grant for the first release, and configuration information of a configured grant for a second release based on at least one of a format and a size of downlink control information used for each of the pieces of configuration information, or a Radio Network Temporary Identifier (RNTI) used for each of the pieces of configuration information.
